# EUROPÄISCHE PATENTSCHRIFT

(11) **EP 2 864 734 B1**
(45) Veröffentlichungstag und Bekanntmachung des Hinweises auf die Patenterteilung: **01.06.2016**
(21) Anmeldenummer: 13731035.5
(22) Anmeldetag: 19.06.2013
(51) Int. Cl.: G01C 21/34, B60L 11/18, G01C 21/36

(54) **NAVIGATIONSVORRICHTUNG MIT EINER REICHWEITENANZEIGE FÜR EINEN ELEKTRISCHEN FAHRBETRIEB UND KRAFTWAGEN MIT EINER NAVIGATIONSVORRICHTUNG**
NAVIGATION DEVICE HAVING A RANGE INDICATOR FOR AN ELECTRIC DRIVING OPERATION AND MOTOR VEHICLE HAVING A NAVIGATION DEVICE
DISPOSITIF DE NAVIGATION DOTÉ D'UN AFFICHAGE D'AUTONOMIE POUR UNE TRACTION ÉLECTRIQUE ET VÉHICULE AUTOMOBILE DOTÉ D'UN DISPOSITIF DE NAVIGATION

(30) Priorität: 23.06.2012 DE 102012012567
(43) Veröffentlichungstag der Anmeldung: 29.04.2015
(73) Patentinhaber: Audi AG, 85045 Ingolstadt (DE)
(72) Erfinder: HÖSTEREI, Jörg, 85051 Ingolstadt (DE)
(74) Vertreter: Schuster, Simon
(86) Internationale Anmeldenummer: PCT/EP2013/001806
(87) Internationale Veröffentlichungsnummer: WO 2013/189595

(56) Entgegenhaltungen:
- EP-A2- 0 638 887
- DE-A1-102008 037 262
- DE-A1-102009 034 508
- DE-A1-102009 052 853

## Beschreibung

Die Erfindung betrifft eine Navigationsvorrichtung mit einer Reichweitenanzeige für einen elektrischen Fahrbetrieb eines Kraftwagens. Zu der Erfindung gehört auch ein entsprechender Kraftwagen. Die Navigationsvorrichtung weist eine Auswerteeinrichtung zum Ermitteln einer maximalen Reichweite auf, wie sie voraussichtlich mit einer in einer Energiespeichervorrichtung des Kraftwagens gespeicherten Energiemenge für den elektrischen Antrieb im aktuellen Fahrbetriebsmodus voraussichtlich noch zurückgelegt werden kann. Eine Anzeigeeinrichtung zum Anzeigen einer Straßenkarte stellt hierzu einen Rand eines durch die ermittelte maximale Reichweite abgegrenzten Aktionsgebiets dar.

Der erfindungsgemäße Kraftwagen kann ein hybrides Antriebssystem, umfassend einen Verbrennungsmotor und einen Elektromotor, oder auch ein rein elektrisches Antriebssystem umfassen. Im Zusammenhang mit einem hybriden Fahrantrieb ist unter einem elektrischen Fahrbetrieb hier zu verstehen, dass der Elektromotor die gesamte oder zumindest einen Teil der Antriebsleistung erzeugt. Ein Kraftwagen mit Hybridantrieb oder rein elektrischem Antrieb weist im elektrischen Fahrbetrieb in der Regel eine geringere Reichweite auf als ein Kraftwagen, der ausschließlich mittels eines Verbrennungsmotors und fossilem Treibstoff angetrieben wird. Aus diesem Grund ist es sehr wichtig, den Fahrer für die limitierte Reichweite im elektrischen Fahrbetrieb zu sensibilisieren, damit dieser sein Fahrverhalten anpasst und entweder verbrauchsarm fährt oder rechtzeitig eine Ladestation zum Aufladen des Energiespeichers ansteuert. Um dies zu gewährleisten, ist eine ständige und möglichst genaue Anzeige der aktuell noch zur Verfügung stehenden, mit der verbleibenden Energiemenge noch zurücklegbaren Fahrstrecke nötig.

Hierzu ist bekannt, auf einer Anzeigeeinrichtung einer Navigationsvorrichtung, auf welcher eine Straßenkarte für die Routenplanung angezeigt wird, auch einen Rand desjenigen Aktionsgebiets darzustellen, das sich durch eine maximale Reichweite ergibt, wie sie auf Grundlage der verbleibenden Menge an elektrischer Energie voraussichtlich noch zurückgelegt werden kann. Dieser Rand kann dabei einen ungleichförmigen Verlauf aufweisen, um den Fahrer über die fahrstreckenabhängige maximale Reichweite zu informieren. Beispielsweise kann ein Verbrauch auf einer Autobahn bei gleichmäßiger Fahrgeschwindigkeit sehr viel geringer sein als eine Fahrt durch ein Stadtgebiet, in welchem der Kraftwagen z.B. an Ampeln regelmäßig angehalten und wieder beschleunigt werden muss. Außerdem kann der Verbrauch z.B. auch von der Topographie der Umgebung, dem Fahrstil des Fahrers und der Witterung abhängen.

Der gegebenenfalls ungleichförmige Rand des Aktionsgebiets muss auf der dargestellten Straßenkarte gut erkennbar sein und sich insbesondere deutlich von den übrigen auf der Straßenkarte dargestellten Elementen des Straßenverkehrsnetzes, also z.B. den Autobahnen und Landstraßen, abheben. Andernfalls kann es dazu kommen, dass ein Fahrer beim flüchtigen Betrachten der Anzeigeeinrichtung eine Linie, welche den Rand des Aktionsgebiets darstellen soll, beispielsweise für eine Straße hält. Die Wahl der Linienfarbe und des Linientyps muss deshalb auf die Graphikdaten der angezeigten Straßenkarte abgestimmt sein. Unter einem Graphikdatensatz werden in diesem Zusammenhang hier diejenigen Daten verstanden, auf deren Grundlage eine bestimmte Straßenkarte zu einem vorgegebenen Gebiet dargestellt wird ist und die eine bestimmte Zuordnung von Farben und/oder Texturen zu den unterschiedlichen Komponenten des Straßenverkehrsnetzes (z.B. Autobahnen, Landstraßen) und den geografischen Informationen (z.B. Waldgebiet, bebautes Gebiet) festlegen. Beispielsweise gibt es Graphikdatensätze für Straßenkarten, die für eine Tagfahrt einerseits und für eine Nachtfahrt andererseits angepasst sind. Andere Beispiele sind eine Verkehrskarte und eine auf Satellitenbildern basierende Karte, die beispielsweise mit Bildmaterial des Internetdienstes Google-Earth ® erstellt sein kann. Des Weiteren kann eine Landschaft bzw. ein an die Straßen angrenzendes Gebiet auch je nach Zoomstufe andersfarbig dargestellt sein.

Um nun auf Grundlage solcher Graphikdatensätze eine Anzeige einer solchen Straßenkarte zu erzeugen, auf welcher auch der Rand des Aktionsgebiets dargestellt ist, muss beispielsweise die Farbe der Linie zum Darstellen des Randes das Aktionsgebiets auf die Farbpalette des Graphikdatensatzes abgestimmt sein. Wird ein neuer Graphikdatensatz zum Darstellen einer bestimmten Straßenkarte verwendet, so muss entsprechend auch die Anzeigeeinrichtung zum Darstellen des Rands des Aktionsgebietes an den neuen Graphikdatensatz angepasst werden.

Die DE102009034508, DE102008037262, DE102009052853, und EP638887 offenbaren Reichweitenanzeigen für einen elektrischen Fahrbetrieb.

Eine der Erfindung zugrundeliegende Aufgabe ist es, in einen Kraftwagen eine Reichweitenanzeige für einen elektrischen Fahrbetrieb bereitzustellen, die sich mit geringem Aufwand an unterschiedliche Typen von Straßenkarten anpassen lässt.

Die Aufgabe wird durch eine Navigationsvorrichtung gemäß Patentanspruch 1 und einen Kraftwagen gemäß Patentanspruch 10 gelöst. Vorteilhafte Weiterbildungen der erfindungsgemäßen Navigationsvorrichtung sind durch die Unteransprüche gegeben.

Die erfindungsgemäße Navigationsvorrichtung weist in der bereits beschriebenen Weise eine Auswerteeinrichtung zum Ermitteln einer maximalen elektrischen Reichweite auf, wie sie mit einer in einer elektrischen Energiespeichervorrichtung des Kraftwagens gespeicherten Energiemenge voraussichtlich noch zurückgelegt werden kann. Bei der Energiespeichervorrichtung kann es sich beispielsweise um eine Traktionsbatterie oder um ein Vorratsreservoir für ein Betriebsmittel einer Brennstoffzelle handeln. Bei der Auswerteeinrichtung kann es sich im einfachsten Fall um einen Signaleingang handeln, der dazu ausgelegt ist, die Daten betreffend die maximale Reichweite beispielsweise von einem Steuergerät des Kraftwagens zu empfangen. Die Auswerteeinrichtung kann aber auch einen Prozessor umfassen, der dazu ausgerichtet ist, die maximale Reichweite z.B. auf Grundlage von weiteren Betriebsdaten des Kraftwagens selbst zu ermitteln. Es kann insbesondere eine an sich bekannte Auswerteeinrichtung verwendet werden.

Die Navigationsvorrichtung weist des Weiteren eine Anzeigevorrichtung zum Anzeigen einer Straßenkarte auf, auf welcher ein Rand eines durch die ermittelte maximale elektrische Reichweite abgegrenzten Aktionsgebiets dargestellt ist. Bei der Anzeigeeinrichtung kann es sich beispielsweise um einen Bildschirm oder eine Head-up-Anzeigeeinheit handeln, mittels welche eine Anzeige z.B. auf eine Windschutzscheibe projizierbar ist.

Erfindungsgemäß ist nun zusätzlich eine grafische Verarbeitungseinrichtung vorgesehen, über welche die Auswerteeinrichtung mit der Anzeigeeinrichtung gekoppelt ist. Diese grafische Verarbeitungseinrichtung ist dazu ausgelegt, die Daten zum Verlauf des Randes des Aktionsgebietes, also zur Form des Aktionsgebiets, von der Auswerteeinrichtung zu empfangen und aus diesen und auf der Grundlage von Graphikdaten der anzuzeigenden Straßenkarte, also einem bestimmten Graphikdatensatz, eine Darstellung der Straßenkarte mit einem gegenüber einer Kartenebene der Straßenkarte höhenversetzten Bereich zu erzeugen. Mit anderen Worten wird die Straßenkarte nicht flach dargestellt, sondern es gibt einen höhenversetzten Bereich, der über die Darstellungsebene der Straßenkarte hinausragt oder in die Ebene hineinragt, also ein Plateau eine Wölbung oder eine Senke oder ein Tal. Der Verlauf des Randes dieses höhenversetzten Bereichs entspricht hierbei dem Verlauf des Randes bzw. dem Ende des Aktionsgebiets. Mit anderen Worten wird auf der Straßenkarte dasjenige Aktionsgebiet, in welchem sich der Kraftwagen mit der verbleibenden Menge an elektrischer Energie voraussichtlich noch bewegen kann, als der höhenversetzte Bereich dargestellt. Entsprechend ist die Anzeigeeinrichtung der erfindungsgemäßen Navigationsvorrichtung auch dazu ausgelegt, für die Reichweitenanzeige diese Straßenkarte mit dem höhenversetzten Bereich anzuzeigen.

Die erfindungsgemäße Navigationsvorrichtung weist den Vorteil auf, dass keine Umwandlung der Farbcodierung des Graphikdatensatzes oder eine Anpassung des Kontrastes der durch die Graphikdaten selbst dargestellten Strukturen nötig ist, um den Verlauf des Randes des Aktionsgebiets gut erkennbar auf der Anzeigeeinrichtung darzustellen. Es kann also unabhängig von dem gewählten Straßenkartentyp (Karte für Tagfahrt, Nachtfahrt oder auch eine Darstellung von Satellitenbildern) der ermittelte Rand des Aktionsgebiets zusätzlich dargestellt werden. Diese wird durch die spezielle ausgestaltete Verarbeitungseinrichtung ermöglicht, die als Eingangsparameter die Verlaufsdaten des Randes des Aktionsgebiets und den Graphikdatensatz empfängt und hieraus die Darstellungsdaten erzeugt.

Bei der erfindungsgemäßen Navigationsvorrichtung ist insbesondere vorgesehen, dass es sich bei der ermittelten maximalen Reichweite um eine Strecke handelt, die mit dem Kraftwagen von der aktuellen Position aus höchstens noch zurückgelegt werden kann, wenn der Energieverbrauch des Kraftwagens einen vorbestimmten Höchstverbrauchswert nicht überschreitet. Da der Energieverbrauch nur geschätzt werden kann, handelt es sich hierbei in der Regel um den Wert, wie er sich bei der günstigsten Fahrweise ergibt. Hier ist es vorteilhaft, wenn der Fahrer auch gewarnt ist, dass bei verbrauchsintensiverer Fahrweise oder bei Nutzung weitere elektrischen Komponenten die Reichweite geringer sein kann. Bevorzugt ist die Auswerteeinrichtung deshalb dazu ausgelegt, die zumindest eine maximale elektrische Reichweite unter der Annahme eines günstigsten Verbrauchsfalls zu ermitteln, in welchem ein Durchschnittsverbrauch des Kraftwagens einem vorbestimmten ersten Verbrauchswert entspricht. Es kann hierbei die Reichweite zugrunde gelegt werden, die der Kraftwagen bis zum vollständigen Verbrauch der Energiemenge zurücklegen kann. Es kann auch vorgesehen sein, anstelle des vollständigen Verbrauchs den Verbrauch bis zu einer bestimmten Restreserve zugrunde zu legen. Zusätzlich wird hierbei dann auch eine Reichweite für zumindest einen ungünstigeren Verbrauchsfall ermittelt, in welchem der Durchschnittsverbrauch einem zweiten Verbrauchswert entspricht, der größer als der erste Verbrauchswert ist. Diese weitere Reichweite ist natürlich geringer als die erste Reichweite für den günstigsten Verbrauchsfall. Aus dem sich hieraus ergebenden Streckenunterschied wird dann eine Warnzone aus der Menge derjenigen Orte gebildet, die nur erreicht werden können, wenn der Durchschnittsverbrauch unter dem zweiten Verbrauchswert liegt. Durch Ermitteln einer solchen Warnzone ergibt sich der Vorteil, dass Unwägbarkeiten bei der Prädiktion des Energieverbrauchs berücksichtigt werden können.

Um diese Unwägbarkeiten dem Fahrer des Kraftwagens gut erkennbar anzuzeigen, damit dieser sein Fahrverhalten und seine Routenplanung entsprechend anpassen kann, sieht eine Weiterbildung der Navigationsvorrichtung vor, dass bei dem höhenversetzte Bereich derjenige Teilbereich, welcher der Warnzone entspricht, also etwa der Rand der Senke oder des Plateaus, eine betragsmäßig größere Steigung aufweist als derjenige Teilbereich, der im Inneren des von der Warnzone gebildeten Gürtels liegt, also der Senkenboden oder die Plateauebene. Dieser innere Bereich ist auch bei einem Durchschnittsverbrauch sicher erreichbar, der größer als der zweite Verbrauchswert ist.

Da die erfindungsgemäße Navigationsvorrichtung nun sehr flexibel eine Reichweitenanzeige auf der Grundlage unterschiedlicher Graphikdatensätze ermöglicht, sieht eine zweckmäßige Weiterbildung vor, dass in einem Speicher der Navigationsvorrichtung unterschiedliche Graphikdatensätze zu Straßenkarten gespeichert sind und die Verarbeitungseinrichtung dazu ausgelegt ist, in Abhängigkeit von einem Steuersignal einen der Graphikdatensätze für das Erzeugen der Darstellung auf der Anzeigeeinrichtung auszuwählen. Bei den unterschiedlichen Graphikdatensätzen handelt es sich insbesondere zumindest um eine der folgenden Straßenkarten: eine farblich für eine Nachtfahrt angepasste Straßenkarte, eine farblich für eine Tagfahrt angepasste Straßenkarte, eine bestimmte Straßentypen farblich oder darstellerisch hervorhebende Straßenkarte, eine aus Satellitenbildern oder Flugaufnahmen gebildete Straßenkarte. Wie bereits ausgeführt, kann bei der erfindungsgemäßen Navigationsvorrichtung problemlos zwischen den Graphikdatensätzen umgeschaltet werden, ohne dass hierzu auch eine Anpassung des Mechanismus für die Darstellung des Aktionsgebiets nötig ist.

Insbesondere kann die Navigationsvorrichtung nun auch eine Empfangseinrichtung zum Empfangen von neuen, unbekannten Graphikdatensätzen für Straßenkarten aufweisen. Beispielsweise kann die Empfangseinrichtung ein CD-Rom-Laufwerk umfassen, über welches Speichermedien mit unterschiedlichen Graphikdatensätzen ausgelesen werden können. Die Empfangseinrichtung kann auch dazu ausgelegt sein, Graphikdatensätze über eine Mobilfunkverbindung aus dem Internet zu empfangen. Die erfindungsgemäße Navigationsvorrichtung weist ja den Vorteil auf, dass die Darstellung der Straßenkarten, die auf der Grundlage der unterschiedlichen Graphikdatensätze gebildet sind, stets um eine Reichweitenanzeige ergänzt werden können, die durch einen Fahrer gut erkennbar und leicht interpretierbar ist.

Bei der erfindungsgemäßen Navigationsvorrichtung ist es ebenfalls problemlos möglich, die Auswerteeinrichtung dazu auszulegen, den Rand des Aktionsgebiets fahrstreckenabhängig zu ermitteln, d.h. auch einen ungleichförmigen Verlauf des Randes des Aktionsgebiets zugrunde zu legen, wie durch Ermitteln mehrerer maximaler Reichweiten für unterschiedliche Fahrrouten ermittelt werden kann. Der unförmige Rand ist ergibt sich hierbei z.B. durch Einbezug des voraussichtlichen Verkehrsaufkommens und/oder geographische Hindernisse (Seen, Berge etc.).

Zum Ermitteln der maximalen Reichweite und/oder der Reichweiten für ungünstigere Verbrauchsfälle sieht eine Ausführungsform der erfindungsgemäßen Navigationsvorrichtung vor, dass die Auswerteeinrichtung eine Vorhersage für einen Energieverbrauch des Kraftwagens in Abhängigkeit von zumindest einem der folgenden Aspekte ermittelt: einer Straßenart (z.B. Landstraße oder Autobahn), einer Topografie der Umgebung (z.B. bergiges Land oder ebene Landschaft), einem beobachteten Fahrverhalten des Fahrers (z.B. unregelmäßige Fahrgeschwindigkeit oder gleichmäßiges Fahren), einer Witterung (z.B. Schneefall, Regen oder trockenes Wetter), einem durch aktuelle Verkehrsdaten beschriebenes Verkehrsaufkommen, wie es beispielsweise über Verkehrsfunk oder über eine Internetanbindung ermittelt werden kann, einer Außentemperatur, einem Reibwert der Straße. Durch eine Außentemperatur ist insbesondere bei elektrisch betriebenen Klimaanlagen und Heizungen des Kraftwagens die für den eigentlichen elektrischen Fahrbetrieb bereitstehende Energiemenge begrenzt. Ein Reibwert der Straße kann beispielsweise über ein elektrisches Stabilitätssystem (ESP - Elektronisches Stabilitätsprogramm) des Kraftwagens selbst oder anderer Kraftwagen, die mit dem Kraftwagen beispielsweise über Car-to-Car-Kommunikation in Verbindung stehen, ermittelt werden. Durch Berücksichtigen der genannten Aspekte wird eine genauere Bestimmung der maximalen Reichweitewerte und der Warnzone ermöglicht.

Wie bereits ausgeführt, gehört zu der Erfindung auch ein Kraftwagen, der sich dadurch auszeichnet dass er eine Ausführungsform der erfindungsgemäßen Navigationsvorrichtung aufweist.

Im Folgenden ist die Erfindung noch einmal genauer anhand eines konkreten Ausführungsbeispiels erläutert. Dazu zeigt:
- Fig. 1: eine schematische Darstellung einer bevorzugten Ausführungsform des erfindungsgemäßen Kraftwagens,
- Fig. 2 - 6: jeweils eine Reichweitenanzeige für einen elektrischen Fahrbetrieb des Kraftwagens gemäß Fig. 1, wie sie durch eine Navigationsvorrichtung des Kraftwagens erzeugt werden kann.

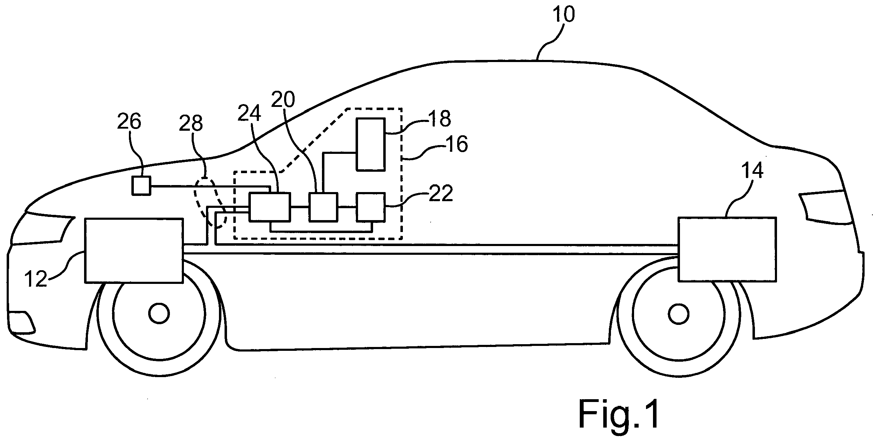

In Fig. 1 ist ein Kraftwagen 10 gezeigt, bei dem es sich beispielsweise um einen Personenkraftwagen handeln kann. Der Kraftwagen 10 kann einen Elektromotor 12 oder mehrere Elektromotoren als Fahrantrieb aufweisen. Zusätzlich kann ein Verbrennungsmotor für einen Hybridantrieb bereitgestellt sein. Der Elektromotor 12 wird in dem gezeigten Beispiel durch eine Energiespeichereinrichtung 14 mit elektrischer Energie versorgt. Bei der Energiespeichervorrichtung kann es sich beispielsweise um eine Traktionsbatterie oder einen Brennstoffzellenstapel mit zugehörigem Betriebsmittelreservoir handeln. Im Kraftwagen 10 ist auch eine Navigationsvorrichtung 16 bereitgestellt. Die Navigationsvorrichtung 16 umfasst eine Anzeigeeinrichtung 18, beispielsweise einen Bildschirm, eine Verarbeitungseinrichtung 20, welche die Anzeigeeinrichtung 18 steuert, einen Speicher 22, in welchem Graphikdaten zu mehreren Straßenkarten gespeichert sind, und eine Auswerteeinrichtung 24.

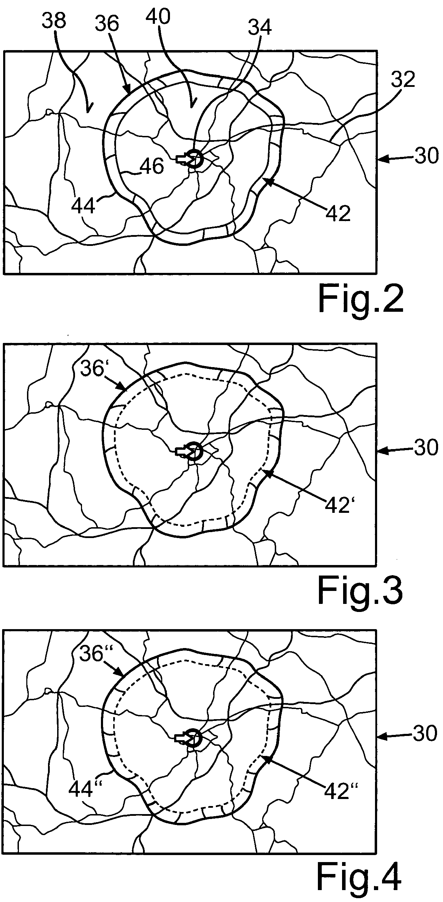

Durch die Navigationsvorrichtung 16 wird einem (nicht dargestellten) Fahrer des Kraftwagens 10 auf der Anzeigeeinrichtung 18 eine Straßenkarte zu der Umgebung des Kraftwagens 10 angezeigt. Mögliche Anzeigen, die von der Navigationsvorrichtung 16 auf der Anzeigeeinrichtung 18 dargestellt werden können, sind in Fig. 2 bis Fig. 6 beispielhaft gezeigt. Auf der Straßenkarte ist neben dem eigentlichen Straßennetz noch eine Information zu einer verbleibenden maximalen Reichweite angezeigt. Die maximale Reichweite grenzte einen Aktionsbereich ab, in welchem der Fahrer mit dem Kraftwagen 10 unter Nutzung des Elektromotors 12 als Antrieb mit der in der Speichervorrichtung 14 verbleibenden Energiemenge zumindest dann jeden Ort erreichen kann, wenn er diesen direkt über das Straßennetz anfährt. Zum Erzeugen dieser Anzeige wird durch die Auswerteeinrichtung 24 von einer Positionsermittlungseinrichtung 26, beispielsweise einem GPS-Empfänger (GPS - Global Positioning System) ein Signal empfangen, welches die aktuelle Position des Kraftwagens 10 angibt. Des Weiteren empfängt die Auswerteeinrichtung 24 Daten betreffend die in der Energiespeichervorrichtung 14 noch vorhandene Energiemenge von der Energiespeichervorrichtung 14. Des Weiteren kann die Auswerteeinrichtung 24 beispielsweise auch mit dem Elektromotor 12 gekoppelt sein, um beispielsweise von einem (nicht dargestellten) Steuergerät des Elektromotors 12 Daten betreffend einen aktuellen Energieverbrauch des Elektromotors 12 oder auch eines bisherigen Durchschnittsverbrauchs oder eines zeitlichen Verlaufs eines Energieverbrauchswerts über einen vorbestimmten Zeitraum zu empfangen. Die Datenübertragung kann beispielsweise über ein CAN-Bus 28 (CAN - Controller Area Network) erfolgen.

Aus den empfangenen Daten ermittelt die Auswerteeinrichtung Werte für eine maximale Reichweite, d.h. diejenige Strecke, die mit der verbleibenden Energiemenge oder mit einem vorbestimmten Anteil davon voraussichtlich noch im aktuellen Fahrbetriebsmodus, d.h. bei gleichbleibender Nutzung des Elektromotors 12 für den Antrieb, noch zurückgelegt werden kann. Die Reichweite erfolgt dabei fahrstreckenabhängig, wozu die Auswerteeinrichtung von dem Speicher 22 Daten betreffend das den Kraftwagen 10 umgebende Straßenverkehrswegenetz empfängt. Zusätzlich ermittelt die Auswerteeinrichtung 24 noch weitere Reichweitewerte, die sich ergeben, wenn der zum Ermitteln der maximalen elektrischen Reichweite zugrunde gelegte Durchschnittsverbrauch überschritten wird.

Die Auswerteeinrichtung 24 überträgt die Daten betreffend die fahrstreckenabhängig ermittelte maximale Reichweite und die Daten zu den bei höherem Durchschnittsverbrauch sich ergebenden geringeren Reichweiten an die Verarbeitungseinrichtung 20. Die Verarbeitungseinrichtung 20 ist ebenfalls mit dem Speicher 22 gekoppelt und empfängt von dem Speicher 22 Graphikdaten zu der anzuzeigenden Straßenkarte. Durch die Graphikdaten wird z.B. festgelegt, welche Farbe den jeweiligen anzuzeigenden Straßentypen zugeordnet ist und wie beispielsweise ein Waldgebiet darzustellen ist (Textur und Farbe). Die sich aus den Daten des Speichers 22 ergebende Straßenkarte wird durch die Verarbeitungseinrichtung in Abhängigkeit von den von der Auswerteeinrichtung 24 empfangenen Daten verändert, um auf der Anzeigeeinheit 18 die Straßenkarte kombiniert mit einer Reichweitenanzeige anzuzeigen. Diese Anzeige umfasst eine dreidimensionale Darstellung der verfügbaren elektrischen Reichweite an sich. Die elektrische Reichweite wird durch eine dreidimensionale Wölbung oder Delle dargestellt, bei welcher der ausgewählte Kartentyp (3D oder 2D), die Kartenfarbe (Tag oder Nacht) sowie die Kartenart (Standard, mit eingetragenem Verkehrsaufkommen, Satellitenbilder) weder farblich noch mit Kontrasten verändert werden müssen, um die eigentliche Reichenweitenanzeige zu integrieren.

Im Folgenden ist hierzu anhand von Fig. 2 bis Fig. 6 beispielhaft beschrieben, wie durch die Navigationsvorrichtung 16 unterschiedliche Reichweitenanzeigen in unterschiedlichen Typen von Straßenkarten integriert sein können.

In Fig. 2 ist eine Straßenkarte 30 gezeigt, welche ein Verkehrswegenetz 32 in einer Umgebung um die aktuelle Position 34 des Kraftwagens 10 herum anzeigt. Die Straßenkarte 30 ist mit einem höhenversetzten Bereich 36 dargestellt, der sich hier als Plateau über eine Kartenebene 38 der Straßenkarte 30 erhebt. Der höhenversetzte Bereich 36 weist in dem Beispiel von Fig. 2 eine Plateauebene 40 und einen abfallenden Randbereich 42 auf. Die Breite des Randbereichs 42 entspricht der Breite derjenigen Zonen, die mit dem Kraftwagen 10 ausgehend von der aktuellen Position 34 nur unter der Bedingung erreicht werden kann, wenn der Durchschnittsverbrauch des Kraftwagens 10 an Energie unter einem vorbestimmten Verbrauchswert liegt. Der Randbereich 42 stellt somit eine Warnzone dar. Der Kartenbereich der Plateauebene 40 zeigt dagegen Orte an, die (gegebenenfalls auf kürzestem Wege über das Straßennetz 32) auch mit einem höheren Durchschnittsverbrauchswert noch angefahren werden können. Die Breite des abfallenden Bereichs 42 ist davon abhängig, mit welcher Zuverlässigkeit der Energieverbrauch ermittelt werden kann. Für die Ermittlung des Durchschnittsverbrauchs kann durch die Auswerteeinrichtung 24 berücksichtigt werden, über welchen Straßentyp ein jeweiliger Ort erreicht werden kann, welche Höhenunterschiede zu überwinden sind, wie der Fahrer den Kraftwagen 10 fährt, welches Verkehrsaufkommen auf den Straßen herrscht, welche Witterung und welche Außentemperatur vorliegt oder auch welchen Reibwert einzelne Straßenabschnitte aufweisen. Insbesondere kann die Auswerteeinrichtung auch mit weiteren elektrischen Verbrauchern des Kraftwagens 10 gekoppelt sein, um auch deren Energieverbrauch, der ebenfalls aus der Energiespeichervorrichtung 14 gedeckt wird, zu erfassen und in die Auswertung mit einfließen zu lassen.

Ein äußerer Rand 44 des höhenversetzten Bereichs 36 grenzt dasjenige Gebiet ab, in welchem mit dem Kraftwagen 10 mit der verbleibenden Energiemenge (oder der verbleibenden Energiemenge abzüglich einer Restreserve) jeder Ort in einem günstigsten Verbrauchsfall angefahren werden kann. Mit anderen Worten kann der Rand 44 mit dem Kraftwagen 10 nur erreicht werden, wenn der Durchschnittsverbrauch beim Anfahren eines Ortes, der auf dem Rand 44 liegt, einem vorbestimmten Minimalverbrauchswert entspricht. Der Rand 44 stellt somit die maximale Reichweite bei vollständigem Verbrauch oder bei Verbrauch bis zur Mindestrestreserve dar. Der Rand 44 ist dabei fahrstreckenabhängig ermittelt, weshalb er einen unregelmäßigen Verlauf auf der Straßenkarte 30 aufweist.

Ein Rand 46 der Plateauebene 40 kann unter Zugrundelegung eines zweiten Durchschnittsverbrauchswerts ermittelt werden. Durch die Verwendung eines Plateaus als höhenversetzter Bereich 36 ergibt sich hierbei der Vorteil, dass im einfachsten Fall unter Zugrundelegung von nur zwei Durchschnittsverbrauchswerten bereits der abfallende Bereich 42 festgelegt werden kann.

In Fig. 3 ist eine Anzeige der Straßenkarte 30 gezeigt, bei welcher die Reichenweitenanzeige einen höhenversetzten Bereich 36' in Form einer Wölbung oder Erhebung mit einem abgerundeten abfallenden Bereich 42' umfasst. Durch die Darstellung des höhenversetzten Bereich 36' in Form einer Wölbung ergibt sich der Vorteil, dass im abfallenden Bereich 42' genauere Angaben über die Wahrscheinlichkeit gemacht werden können, dass ein bestimmter Ort noch mit der verbleibenden Energiemenge erreicht werden kann.

In Fig. 4 ist die Straßenkarte 30 für den Fall gezeigt, dass die Reichweitenanzeige durch einen höhenversetzten Bereich 36" in Form einer Senke oder eines Tals erfolgt. Diese Darstellung ist für den Fahrer intuitiv nachvollziehbarer, da er den Eindruck gewinnt, dass es in einem abfallenden Bereich 42" "schwieriger" wird, mit dem Kraftwagen 10 voranzukommen. Dies vermittelt ihm intuitiv den Eindruck, dass der Energievorrat in der Energiespeichereinrichtung im abfallenden Bereich 42" zur Neige geht.

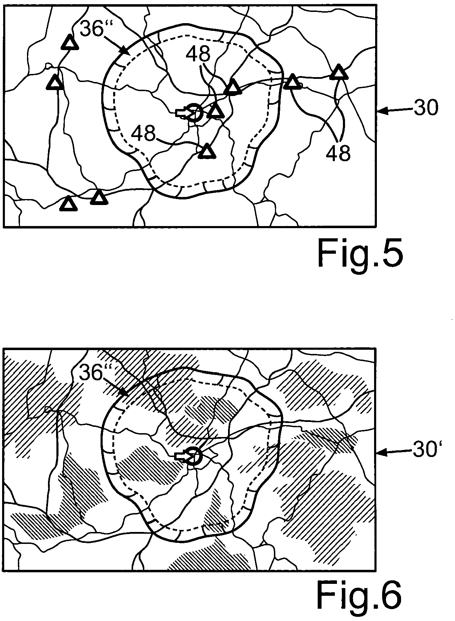

In Fig. 5 ist die Straßenkarte 30 mit der Senke als höhenversetzten Bereich 36" dargestellt. Zusätzlich sind Informationen über das Verkehrsaufkommen in Form von Symbolen 48 der Straßenkarte 30 überlagert. Es sind der Übersichtlichkeit halber nur einige Symbole mit einem Bezugszeichen versehen. Unabhängig von der Form und der Farbe der Symbole 48 ist für den Fahrer die Reichweitenanzeige durch den höhenversetzten Bereich 36" stets einfach zu erkennen. Dies gilt, ohne dies hier zu veranschaulichen, auch bei anderen Ausführungen mit einem Plateau oder einer Wölbung.

In Fig. 6 ist eine Straßenkarte 30' dargestellt, die auf einem anderen Graphikdatensatz beruht, der auf der Grundlage von beispielsweise Satellitendaten gebildet ist. Der Graphikdatensatz für die Straßenkarte 30' kann ebenfalls in dem Speicher 22 gespeichert sein und beispielsweise von dem Fahrer über ein entsprechendes Auswahlmenü eines (nicht dargestellten) Bedienelements der Navigationsvorrichtung 16 ausgewählt worden sein. Die Reichweitenanzeige ist in dem Beispiel von Fig. 6 wieder durch einen höhenversetzten Bereich 36" in Form der Senke in die Straßenkarte 30' integriert. Obwohl ein anderer Graphikdatensatz als in den vorangegangenen Beispielen verwendet wird (siehe Fig. 1 bis Fig. 5) ist für den Fahrer auch bei dem Graphikdatensatz für die Straßenkarte 30' die gleiche Anzeigeform einer Senke als höhenversetzter Bereich 36" weiterhin gut als Reichweitenanzeige interpretierbar. Mit anderen Worten muss die Reichweitenanzeige nicht an den verwendeten Graphikdatensatz angepasst werden oder umgekehrt der Graphikdatensatz in Abhängigkeit von der verwendeten Reichweitenanzeige ausgewählt werden. So ist es beispielsweise auch möglich, den Graphikdatensatz automatisch zu wechseln, wenn der Fahrer nachts fährt und deshalb eine kontrastreichere Darstellung einer Straßenkarte günstig ist, zu der ein entsprechender Graphikdatensatz in Speicher 22 gespeichert sein kann. Die Reichweitenanzeige kann beibehalten werden, so dass der Fahrer nicht irritiert wird.

Insgesamt ist durch das Beispiel gezeigt, dass keine Umwandlung der bisher gängigen Farbcodierung oder des Kontrastes einer Straßenkarte nötig ist, um eine Reichweitenanzeige in eine Straßenkarte zu integrieren. Die Variante "Senke"/"Tal" kann durch den Fahrer besonders einfach interpretiert werden, da er den Eindruck gewinnt, mit der aktuell verfügbaren elektrischen Energie des Fahrzeugs zwar die umliegende Wand des Tals (abfallender Bereich 42") hinauffahren kann, aber über den oberen Rand 44" niemals hinausfahren kann.

Durch die abfallenden Bereiche 42, 42', 42" wird dem Fahrer allgemein eine Warnzone angezeigt, in welcher durch technisch bedingte Ungenauigkeiten bei der Vorhersage des Durchschnittsverbrauchs nicht sichergestellt ist, dass der Fahrer Orte in diesem Bereich zuverlässig erreichen kann.

## Patentansprüche

1. Navigationsvorrichtung (16) mit einer Reichweitenanzeige für einen elektrischen Fahrbetrieb eines Kraftwagens (10), mit
- einer Auswerteeinrichtung (24) zum Ermitteln zumindest einer maximalen Reichweite, die mit einer in einer Energiespeichervorrichtung (14) des Kraftwagens (10) gespeicherten Energiemenge im aktuellen Fahrbetriebsmodus voraussichtlich noch zurückgelegt werden kann, und
- einer Anzeigeeinrichtung (18) zum Anzeigen einer Straßenkarte (30, 30'), auf welcher ein Rand (44, 44") eines durch die ermittelte zumindest eine maximale Reichweite abgegrenzten Aktionsgebiets dargestellt ist,
**gekennzeichnet durch**
eine graphische Verarbeitungseinrichtung (20), über welche die Auswerteeinrichtung (24) mit der Anzeigeeinrichtung (18) gekoppelt ist und die dazu ausgelegt ist, Daten zum Verlauf des Randes (44, 44") des Aktionsgebiets zu empfangen und auf der Grundlage von Graphikdaten der anzuzeigenden Straßenkarte (30, 30') eine Darstellung der Straßenkarte (30, 30') mit einem gegenüber einer Kartenebene (38) höhenversetzten Bereich (36, 36', 36") zu erzeugen, wobei ein Verlauf eines Rands (44, 44") des höhenversetzten Bereichs (36, 36', 36") dem Verlauf des Randes (44, 44") des Aktionsgebiets entspricht und wobei die Anzeigeeinrichtung (18) die Straßenkarte (30, 30') mit den höhenversetzten Bereich (36, 36', 36") anzuzeigen ausgelegt ist.

2. Navigationsvorrichtung (16) nach Anspruch 1, **dadurch gekennzeichnet, dass** der höhenversetzte Bereich (36, 36' 36") eine Erhebung (36')oder ein Plateau (36) oder eine Senke (36") umfasst.

3. Navigationsvorrichtung (16) nach Anspruch 1 oder 2, **dadurch gekennzeichnet, dass** die Auswerteeinrichtung (24) dazu ausgelegt ist, die zumindest eine maximale Reichweite unter der Annahme eines günstigsten Verbrauchsfalls zu ermitteln, in welchem ein Durchschnittsverbrauch des Kraftwagens (10) bis zum vollständigen Verbrauch der Energiemenge oder bis zu einer vorbestimmten Restreserve einem vorbestimmten ersten Verbrauchswert entspricht, und zusätzlich eine Reichweite für zumindest einen ungünstigeren Verbrauchsfall zu ermitteln, in welchem der Durchschnittsverbrauch einem zweiten Verbrauchswert entspricht, der größer als der erste Verbrauchswert ist, und daraus eine Warnzone zu bestimmen, die nur erreicht werden kann, wenn der Durchschnittsverbrauch unter dem zweiten Verbrauchswert liegt.

4. Navigationsvorrichtung (16) nach Anspruch 3, wobei der höhenversetzte Bereich (36, 36', 36") in einem Teilbereich (42, 42', 42"), welcher der Warnzone entspricht, eine betragsmäßig größere Steigung aufweist als in einem Teilbereich (40), der von der Warnzone umgeben ist und welcher auch bei einem Durchschnittsverbrauch erreichbar ist, der größer als der zweite Verbrauchswert ist.

5. Navigationsvorrichtung (16) nach einem der vorhergehenden Ansprüche, **dadurch gekennzeichnet, dass** in einem Speicher (22) der Navigationsvorrichtung (16) unterschiedliche Graphikdatensätze gespeichert sind und die Verarbeitungseinrichtung (22) dazu ausgelegt ist, in Abhängigkeit von einem Steuersignal einen der Graphikdatensätze für das Erzeugen der Darstellung auszuwählen.

6. Navigationsvorrichtung (16) nach Anspruch 5, wobei für zumindest eine der folgenden Straßenkarten (30, 30') ein Graphikdatensatz gespeichert ist: eine farblich für eine Nachtfahrt angepasste Straßenkarte, eine farblich für eine Tagfahrt angepasste Straßenkarte (30), eine bestimmte Straßentypen farblich oder darstellerisch hervorhebende Straßenkarte (30), eine aus Satellitenbildern oder Flugaufnahmen gebildete Straßenkarte (30').

7. Navigationsvorrichtung (16) nach Anspruch 5 oder 6, **gekennzeichnet durch** eine Empfangeinrichtung zum Empfangen von Graphikdatensätzen für Straßenkarten (30, 30').

8. Navigationsvorrichtung (16) nach einem der vorhergehenden Ansprüche, **dadurch gekennzeichnet, dass** die Auswerteeinrichtung (24) dazu ausgelegt ist, den Rand (44, 44") des Aktionsgebiets durch Ermitteln mehrerer maximaler Reichweiten für unterschiedliche Fahrrouten fahrstreckenabhängig zu ermitteln.

9. Navigationsvorrichtung (16) nach einem der vorhergehenden Ansprüche, **dadurch gekennzeichnet, dass** die Auswerteeinrichtung (24) eine Vorhersage für einen Energieverbrauch des Kraftwagens (10) in Abhängigkeit von zumindest einem der folgenden Aspekte ermittelt: einer Straßenart, einer Topographie der Umgebung, einem beobachteten Fahrverhalten des Fahrers, einer Witterung, einem durch aktuelle Verkehrsdaten beschriebenes Verkehrsaufkommen, einer Außentemperatur, einem Reibwert der Straße.

10. Kraftwagen (10) mit einer Navigationsvorrichtung (16) nach einem der vorhergehenden Ansprüche.

## Claims

1. A navigation device (16) having a range indication for an electric driving mode of a motor vehicle (10), comprising
- an evaluation unit (24) for determining at least one maximum range which is expected that it can still be travelled in the current driving mode with an amount of energy stored in an energy storage device (14) of the motor vehicle (10), and
- a display unit (18) for displaying a road map (30, 30'), on which a boundary (44, 44") of an area of action delimited by at least one maximum range is shown, **characterised by**
- a graphics processing unit (20), via which the evaluation unit (24) is coupled with the display unit (18) and which is designed to receive data with regard to the course of the boundary (44, 44") of the area of action and to generate, on the basis of graphics data of the road map (30, 30') to be displayed, a representation of the road map (30, 30') with a region (36, 36', 36") that is offset in height with regard to a map plane (38), wherein a course of a boundary (44, 44") of the height-offset region (36, 36', 36") corresponds to the course of the boundary (44, 44") of the area of action, and wherein the display unit (18) is designed to display the road map (30, 30') with the height-offset region (36, 36', 36").

2. The navigation device (16) as claimed in claim 1, **characterised in that** the height-offset region (36, 36', 36") comprises an elevation (36') or a plateau (36) or a depression (36").

3. The navigation device (16) as claimed in claim 1 or 2, **characterised in that** the evaluation unit (24) is designed to determine the at least one maximum range under the assumption of a most favourable consumption case, wherein an average consumption of the motor vehicle (10) up to the complete consumption of the amount of energy or up to a predetermined residual reserve corresponds to a predetermined first consumption value, and in addition to determine a range for at least one less favourable case of consumption, in which the average consumption corresponds to a second consumption value that is higher than the first consumption value, and to determine therefrom a warning zone that can be reached only if the average consumption is below the second consumption value.

4. The navigation device (16) as claimed in claim 3, wherein the height-offset region (36, 36', 36") in one sub-region (42, 42', 42") that corresponds to the warning zone has a gradient with a greater amount than in a sub-region (40) that is surrounded by the warning zone and that can be reached also in the case of an average consumption that is higher than the second consumption value.

5. The navigation device (16) as claimed in any one of the preceding claims, **characterised in that** in a storage (22) of the navigation device (16), different graphics records are stored and the processing unit (22) is designed to select, as a function of a control signal, one of the graphic records for generating the representation.

6. The navigation device (16) as claimed in claim 5, wherein for at least one of the following road maps (30, 30') a graphic record has been stored: a road map adjusted in colour for driving at night, a road map (30) adjusted in colour for driving during the day, a road map (30) that highlights certain road types using certain colours or a certain representation, a road map (30') formed from satellite images or aerial photographs.

7. The navigation device (16) as claimed in claim 5 or 6, **characterised by** a reception unit for receiving graphic records for road maps (30, 30').

8. The navigation device (16) as claimed in any one of the preceding claims, **characterised in that** the evaluation unit (24) is designed to determine the boundary (44, 44") of the area of action by determining a plurality of maximum ranges for different travel routes as a function of the driven route.

9. The navigation device (16) as claimed in any one of the preceding claims, **characterised in that** the evaluation unit (24) determines a prediction for an energy consumption of the motor vehicle (10) as a function of at least one of the following aspects: a type of road, a topography of the environment, an observed driving behaviour of the driver, the weather, traffic volume as described by up-to-date traffic data, an outside temperature, a friction value of the road.

10. A motor vehicle (10) comprising a navigation device (16) as claimed in any one of the preceding claims.

## Revendications

1. Dispositif de navigation (16) pourvu d'un affichage d'autonomie pour un mode de conduite électrique d'un véhicule à moteur (10), comprenant
- un système d'analyse (24) servant à déterminer au moins une autonomie maximale, qui est encore prévisible avec une quantité d'énergie stockée dans un dispositif de stockage d'énergie (14) du véhicule à moteur (10) dans le mode de conduite instantané, et
- un système d'affichage (18) servant à afficher une carte routière (30, 30'), sur laquelle est représentée une bordure (44, 44") d'un champ d'action délimité par l'autonomie ou les autonomies maximales déterminées,
**caractérisé par**
un système de traitement (20) graphique, par l'intermédiaire duquel le système d'analyse (24) est couplé au système d'affichage (18) et qui est configuré pour recevoir des données portant sur le tracé de la bordure (44, 44") du champ d'action et pour, sur la base de données graphiques de la carte routière (30, 30') à afficher, produire une représentation de la carte routière (30, 30') comprenant une zone (36, 36', 36") décalée en hauteur par rapport à un plan de carte (38), un tracé d'une bordure (44, 44") de la zone (36, 36', 36") décalée en hauteur correspondant au tracé de la bordure (44, 44") du champ d'action et le système d'affichage (18) étant configuré pour afficher la carte routière (30, 30') comprenant la zone (36, 36', 36") décalée en hauteur.

2. Dispositif de navigation (16) selon la revendication 1, **caractérisé en ce que** la zone (36, 36', 36") décalée en hauteur comprend une partie surélevée (36') ou un plateau (36) ou un affaissement (36").

3. Dispositif de navigation (16) selon la revendication 1 ou 2, **caractérisé en ce que** le système d'analyse (24) est configuré afin de déterminer la ou les autonomies maximales en supposant un cas donné de consommation favorable, dans lequel une consommation moyenne du véhicule à moteur (10) correspond à une première valeur de consommation prédéfinie jusqu'à la consommation intégrale de la quantité d'énergie ou jusqu'à une réserve restante prédéfinie, et afin, en supplément, de déterminer une autonomie pour au moins un cas donné de consommation non favorable, dans lequel la consommation moyenne correspond à une deuxième valeur de consommation, qui est supérieure à la première valeur de consommation et pour en définir par voie de conclusion une zone d'alerte qui ne peut être atteinte que lorsque la consommation moyenne reste inférieure à la deuxième valeur de consommation.

4. Dispositif de navigation (16) selon la revendication 3, la zone (36, 36', 36") décalée en hauteur présentant, dans une zone partielle (42, 42', 42"), qui correspond à la zone d'alerte, une déclivité plus importante en termes de valeur que dans une zone partielle (40), qui est entourée par la zone d'alerte et qui peut être atteinte également dans le cas d'une consommation moyenne, qui est supérieure à la deuxième valeur de consommation.

5. Dispositif de navigation (16) selon l'une quelconque des revendications précédentes, **caractérisé en ce que** différents jeux de données graphiques sont mémorisés dans une mémoire (22) du dispositif de navigation (16), et **en ce que** le système de traitement (22) est configuré pour sélectionner, en fonction d'un signal de commande, un des jeux de données graphiques en vue de la production de la représentation.

6. Dispositif de navigation (16) selon la revendication 5, un jeu de données graphiques étant mémorisé pour au moins une des cartes routières (30, 30') qui suit : une carte routière dont la couleur est adaptée à un trajet de nuit, une carte routière (30) dont la couleur est adaptée à un trajet de jour, une carte routière (30) dont la couleur ou la représentation met l'accent sur des types de routes définis, une carte routière (30') formée à partir d'images satellites ou de prises de vue aériennes.

7. Dispositif de navigation (16) selon la revendication 5 ou 6, **caractérisé par** un système de réception servant à recevoir des jeux de données graphiques pour des cartes routières (30, 30').

8. Dispositif de navigation (16) selon l'une quelconque des revendications précédentes, **caractérisé en ce que** le système d'analyse (24) est configuré afin de déterminer la bordure (44, 44') du champ d'action en déterminant plusieurs autonomies maximales pour différents itinéraires.

9. Dispositif de navigation (16) selon l'une quelconque des revendications précédentes, **caractérisé en ce que** le système d'analyse (24) détermine une prévision pour une consommation d'énergie du véhicule à moteur (10) en fonction d'au moins un des aspects suivants : un type de route, une topographie des environs, un comportement de conduite observé du conducteur, une intempérie, une densité de trafic décrite par des données de trafic instantanées, une température extérieure, une valeur de frottement de la route.

10. Véhicule à moteur (10) pourvu d'un dispositif de navigation (16) selon l'une quelconque des revendications précédentes.
